# EUROPEAN PATENT APPLICATION

(11) **EP 2 154 592 A1**
(43) Date of publication of application: **17.02.2010**
(21) Application number: 09162620.0
(22) Date of filing: 12.06.2009
(51) Int. Cl.: G05B 23/02

(54) **Distributed decision making architecture for embedded prognostics**

(30) Priority: 15.08.2008 US 192665
(71) Applicant: Honeywell International Inc., Morristown, NJ 07962 (US)
(72) Inventor: Colclough, John C., Morristown, NJ 07962-2245 (US); Felke, Timothy J., Morristown, NJ 07962-2245 (US); Hadden, George D., Morristown, NJ 07962-2245 (US); Kolbet, David M., Morristown, NJ 07962-2245 (US); Magnuson, Randy, Morristown, NJ 07962-2245 (US)
(74) Representative: Buckley, Guy Julian

(57) **Abstract**

A distributed decision making architecture for embedded prognostics in a platform is provided. An estimation system determines at least one performance characteristic of at least one device in the platform. A supervisory system is in communication with, and superior to, the estimation system. The supervisory system calculates a prediction of remaining useful life (RUL) of the at least one device in the platform. The supervisory system is adapted for collecting the at least one performance characteristic from the estimation system to generate a performance estimate, and implementing at least one data-driven equation to match the at least one performance estimate against of at least one known degradation condition to generate the prediction of remaining useful life of the at least one device.

## Description

### STATEMENT REGARDING FEDERALLY SPONSORED RESEARCH OR DEVELOPMENT

This invention was made with Government support under Honeywell Project Number AZ19888 (PS-MRS) entitled "Future Combat Systems-Platform Soldier Mission Readiness System," and awarded by the U.S. Department of Defense under Prime Contract Number W56HZV-05-C-0724, and Subcontract Number 3EC1893 and 5EC8407. The Government has certain rights in this invention.

### FIELD OF THE INVENTION

The present invention generally relates to statistics, and more particularly but not exclusively, to a distributed decision making architecture for embedded prognostics in a platform, such as a vehicle.

### BACKGROUND OF THE INVENTION

Vehicles are used in a variety of settings. For example, aircraft and spacecraft are used in aerospace settings, automobiles, buses, and trains are used in surface settings, and marine vehicles are used on or in marine environments. Health management systems are commonly employed in conjunction with vehicles and similar complex systems (i.e., platforms) for monitoring purposes. Typically, the health management systems may monitor one particular aspect of the vehicle or platform. The health management systems, however, are beginning to monitor more than one aspect of the vehicle with increasing frequency.

A common problem in the deployment of health management systems is the challenge of providing prognostic information, or predictive information, for the platform. Health management systems utilize signals on the platform to generate a prediction of remaining functional life of components of the platform. Traditional embedded solutions to this problem implement the prognostic prediction functionality within software of the line replaceable units (LRUs) on the platform. This solution may result in costly updates, since the initial accuracy of the prediction software may be low.

Because embedded prognostic functionality is replicated in each LRU, predictions from a first LRU do not necessarily represent or take into account data obtained from a second LRU. Accordingly, a need exists for a mechanism to generate prognostic information for a platform, such as a vehicle, in a more efficient and accurate manner. Furthermore, other desirable features and characteristics of the present invention will become apparent from the subsequent detailed description of the invention and the appended claims, taken in conjunction with the accompanying drawings and this background of the invention.

### BRIEF SUMMARY OF THE INVENTION

In one embodiment, by way of example only, a distributed decision making architecture for embedded prognostics in a platform is provided. An estimation system determines at least one performance characteristic of at least one device in the platform. A supervisory system is in communication with and superior to, the estimation system for calculating a prediction of remaining useful life (RUL) of the at least one device in the platform. The supervisory system is adapted for collecting the at least one performance characteristic from the estimation system to generate a performance estimate, and implementing at least one data-driven equation to match the at least one performance estimate against of at least one known degradation condition to generate the prediction of remaining useful life of the at least one device.

In another embodiment, again by way of example only, a method for calculating a prediction of remaining useful life (RUL) of at least one device embedded in a platform is provided. A plurality of input signal values are collected from the at least one device. At least one performance characteristic is determined based on the plurality of input signal values in at least one estimator system. At least one performance estimate is generated from the at least one performance characteristic. The at least one performance estimate is forwarded to a supervisory system. At least one data-driven equation is implemented in the supervisory system to match the at least one performance estimate against at least one known degradation condition to generate the prediction of remaining useful life of the at least one device.

In still another embodiment, again by way of example only, a computer program product for calculating a prediction of remaining useful life (RUL) of at least one device embedded in a platform is provided. The computer program product comprises a computer-readable storage medium having computer-readable program code portions stored therein. The computer-readable program code portions include a first executable portion for collecting a plurality of input signal values from the at least one device, a second executable portion for determining at least one performance characteristic based on the plurality of input signal values in at least one estimator system, a third executable portion for forwarding the at least one performance characteristic to a supervisory system, a fourth executable portion for generating at least one performance estimate from the at least one performance characteristic, a fifth executable portion for forwarding the at least one performance estimate to a supervisory system, and a sixth executable portion for implementing at least one data-driven equation in the supervisory system to match the at least one performance estimate against at least one known degradation condition to generate the prediction of remaining useful life of the at least one device.

### BRIEF DESCRIPTION OF THE DRAWINGS

The present invention will hereinafter be described in conjunction with the following drawing figures, wherein like numerals denote like elements, and

FIG. 1 illustrates an exemplary prognostics generation functionality;

FIG. 2 illustrates an exemplary distributed prognostics generation functionality

FIG. 3 illustrates an exemplary distributed decision making architecture for embedded prognostics in a platform; and

FIG. 4 illustrates an exemplary method for calculating a prediction of remaining useful life (RUL) of at least one device embedded in a platform.

### DETAILED DESCRIPTION OF THE INVENTION

The following detailed description of the invention is merely exemplary in nature and is not intended to limit the invention or the application and uses of the invention. Furthermore, there is no intention to be bound by any theory presented in the preceding background of the invention or the following detailed description of the invention.

Prognostic systems, or prognostic generation functionality, may be embedded in platforms. One goal of such systems is to accurately estimate the remaining life of a device, component or subsystem of the platform. The remaining life may refer to an amount of time that the device can continue to perform its specified function and satisfy its specified performance characteristics.

Existing prognostic solutions tend to be specialized for a single type of device, and require a large amount of tuning of parameters to achieve acceptable levels of accuracy. In addition, the solutions tend to require a large amount of data of the platform to be transferred to a centralized location where sufficient processing bandwidth is available. There is a need for a general purpose approach to prognostics that does not require a large amount of data transfer.

The present description and following claimed subject matter present exemplary system, method, and computer program product embodiments of a mechanism to provide prognostic functionality for one or more devices in a platform, such as a vehicle. The mechanism makes use of a distributed architecture as will be further described. The distributed architecture includes one or more estimation systems closely coupled to the device for receiving data. In contrast to conventional systems, however, information from the estimation systems is provided to a supervisory system. The supervisory system is in communication with, and superior to, each estimation system. The supervisory system takes performance estimate information from the estimation system(s) and implements data-driven equations to match the performance estimate information against known degradation signatures to generate a prediction of remaining useful life (RUL) of one or more devices of the platform. Since the supervisory system is data driven, it is less costly to update; indeed, a single update is capable of providing improvement in prediction functionality for each device in the platform.

The exemplary embodiments described below separate the high-bandwidth, relatively mature portion of the prognostics problem (i.e., estimation), from the low-bandwidth, immature portion of the problem (i.e., interpretation). Estimation is performed on, or close to, the device itself. In this way, high-frequency data is already available. Additionally, in some cases, portions of the estimation data is already performed as part of applicable control laws. Interpretation is performed at a central location where updated degradation signatures and interpretation algorithms may be loaded at a lower cost than updating all devices on the platform. Tools may be provided for use in lab environments to produce degradation signatures for test conditions and for field feedback data.

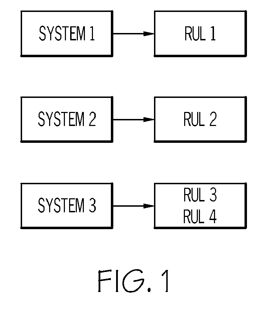

To more effectively illustrate differences between prediction functionality, FIG. 1 depicts typical exemplary prognostics generation functionality employed in platforms such as vehicles. Each system in the platform is responsible for data/signal collection, estimation calculation, and prognostic generation (interpretation). Accordingly, for system 1, a RUL 1 is generated. Similarly, for system 2, a RUL 2 is generated. Finally, for system 3, a RUL 3 and RUL 4 is generated. Each of the RULs 1-4 are representative only of the data collected and analyzed in the particular system that the functionality resides. As a result, it is difficult and perhaps costly to update such individual functionality, as each system must be individually updated. Furthermore, such prognostic generation functionality may not be tunable for shared platform characteristics and the like.

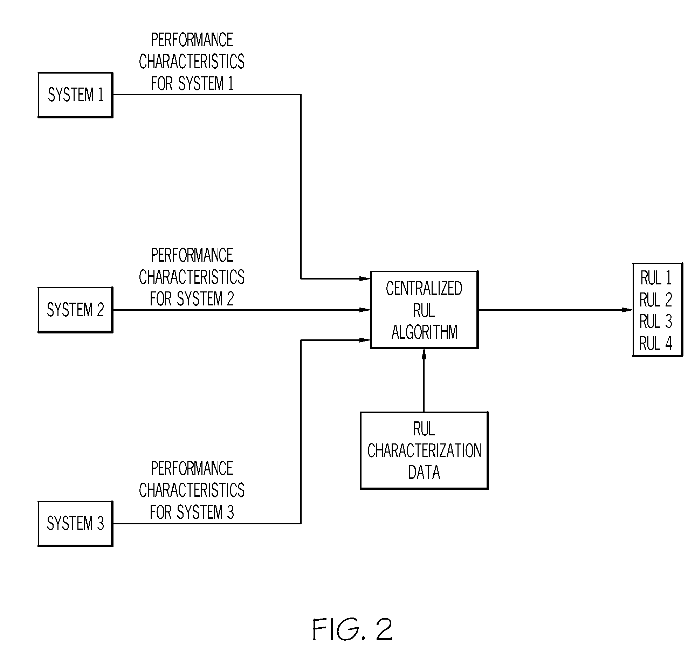

In contrast to the typical prediction functionality employed in FIG. 1, FIG. 2, following, illustrates exemplary distributed prognostics generation functionality for a platform. Measurements of the performance of each system are effectively removed from the functionality of predicting RULs based on current platform performance. The measurements of performance continue to be made by each individual system (i.e., performance characteristics). However, the performance characteristics for each system are fed into a single supervisory function which uses data-driven equations (i.e., a centralized RUL algorithm) to map the current performance data in view of RUL characterization data as shown. As a result, the single supervisory function generates all of the RULs for the platform based on data from a number of systems/sources. The supervisory system interfaces with onboard LRUs of the platform to collect the performance characteristics in real time, execute the data driven equation(s), and publish prediction results for use by other operational and support systems of the platform.

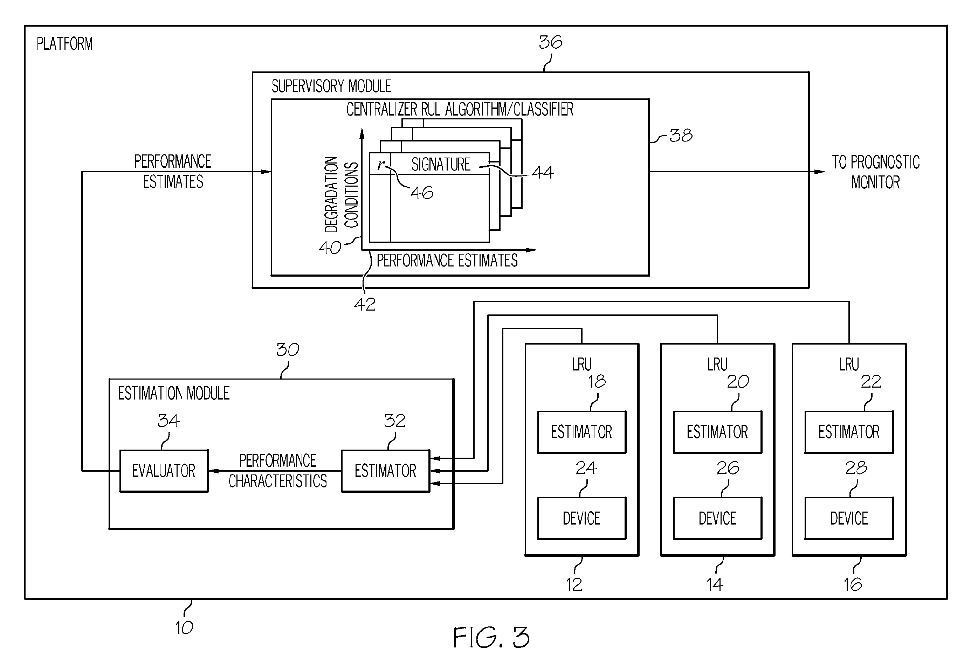

FIG. 3 illustrates an exemplary distributed decision making architecture for embedded prognostics in a platform 10, such as a vehicle. Platform 10 includes individual LRUs 12, 14, and 16. As the skilled artisan will appreciate, LRUs 12, 14, and 16 may be representative of a variety of subsystems, components, etc., of the platform, represented here as devices 24, 26, and 28. The LRUs 12, 14, and 16 may be located in various portions of the platform. Devices 24, 26, and 28 may include a plurality of inputs (not shown for purposes of convenience) for receiving input signals from a variety of sources (sensors, etc.). The input signals are collected by the devices 24, 26, and 28 and provided to estimator modules 18, 20, and 22 integrated into each LRU 12, 14, and 16.

In one embodiment, each estimator 18, 20, and 22 contains estimation algorithms to measure the key performance characteristics of each LRU 12, 14, and 16. Such data may be representative of input/output (I/O) ratios and/or transfer functions, signal-to-noise (S/N) ratios, non-linearity, backlash, and hysteresis properties, and disconnect/software abort rates. An estimation module 30 collects such data from each of the LRUs 12, 14, and 16, and generates values representative of such performance characteristics. The performance characteristics are fed to an evaluator module 34 for generating performance estimate(s) representative of the performance characteristics.

Once the performance estimates are generated, they are forwarded to supervisory module 36 for classification. Supervisory module 36 includes a centralized classification function 38 for receiving the performance estimates and matching the estimates against known degradation signatures for each device 24, 26, and 28. Such matching functionality is depicted as a number of tables (one for each mode of operation), where the degradation conditions 40 are denoted along the Y-axis, and the performance characteristics 42 for the device are denoted along the X-axis. A centralized RUL algorithm/classifier functions as a data-driven equation, bringing to bear data from a variety of sources to generate a number of degradation signatures 44. Degradation signatures 44 represent a mapping of the performance characteristic(s) with at least one known degradation condition. The degradation signatures 44 indicate a remaining useful life (RUL) (r) 46 for the device as expected for a particular operating mode. Interpolation between degradation signatures 44 may be used to improve overall accuracy of the estimate.

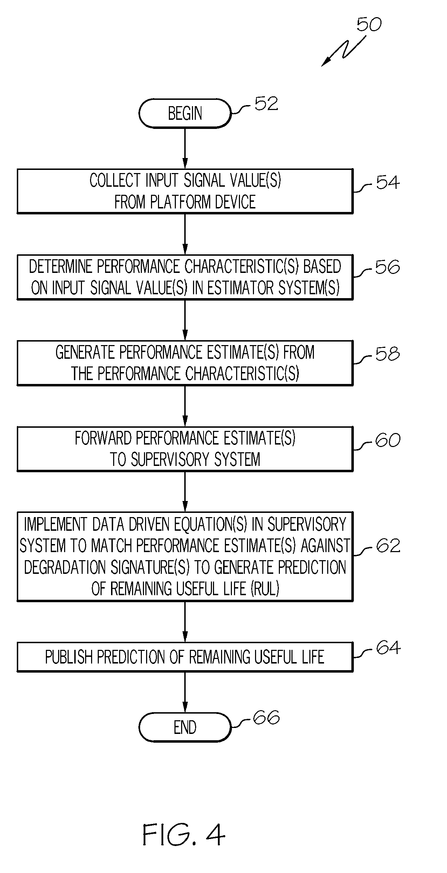

FIG. 4, following, illustrates an exemplary method 50 for calculating a prediction of remaining useful life (RUL) of at least one device embedded in a platform. As one skilled in the art will appreciate, various steps in the method 50 may be implemented in differing ways to suit a particular application. For example, various steps in the method may be omitted, modified, or may be carried out in differing orders. In addition, various steps may be implemented by differing means, such as by hardware, firmware, or software, or a combination thereof operational on, or associated with, the webservice architecture. For example, the methods may be embodied in computer program products, such as digital versatile discs (DVDs) compact discs (CDs) or other storage media. The computer program products may include computer readable program code having executable portions for performing various steps as illustrated in the following method 50.

Method 50 begins (step 52) with the collection of input signal value(s) from one or more platform devices (step 54). Based on the input signal values, one or more performance characteristics are determined in one or more estimator systems (step 56). Based on the performance characteristic(s), one or more performance estimates are generated (step 58). The performance estimates are forwarded to a supervisory system from the estimation system (step 60). One or more data-driven equations are implemented in the supervisory system to match the performance estimate(s) against one or more known degradation signatures to generate a prediction of remaining useful life (RUL) (step 62). The RUL is then published to a prognostic monitor (step 64). The method 50 then ends (step 66).

Some of the functional units described in this specification have been labeled as "modules" in order to more particularly emphasize their implementation independence. For example, functionality labeled as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

Reference throughout this specification to "one embodiment," "an embodiment," or similar language means that a particular feature, structure, or characteristic described in connection with the embodiment is included in at least one embodiment of the present invention. Thus, appearances of the phrases "in one embodiment," "in an embodiment," and similar language throughout this specification may, but do not necessarily, all refer to the same embodiment.

Furthermore, the described features, structures, or characteristics of the invention may be combined in any suitable manner in one or more embodiments. In the following description, numerous specific details are provided, such as examples of programming, software modules, user selections, network transactions, database queries, database structures, hardware modules, hardware circuits, hardware chips, etc., to provide a thorough understanding of embodiments of the invention. One skilled in the relevant art will recognize, however, that the invention may be practiced without one or more of the specific details, or with other methods, components, materials, and so forth. In other instances, well-known structures, materials, or operations are not shown or described in detail to avoid obscuring aspects of the invention.

While one or more embodiments of the present invention have been illustrated in detail, the skilled artisan will appreciate that modifications and adaptations to those embodiments may be made without departing from the scope of the present invention as set forth in the following claims.

## Claims

1. A distributed decision making architecture for embedded prognostics in a platform (10), comprising:
an estimation system (30) for determining at least one performance characteristic of at least one device in the platform; and
a supervisory system (36), in communication with and superior to, the estimation system (30) for calculating a prediction of remaining useful life (RUL) of the at least one device in the platform (10), wherein the supervisory system (36) is adapted for:
collecting the at least one performance characteristic from the estimation system (30) to generate a performance estimate (42), and
implementing at least one data-driven equation to match the at least one performance estimate (42) against at least one known degradation condition (40) to generate the prediction of remaining useful life of the at least one device.

2. The architecture of claim 1, wherein the supervisory system (36) is further adapted for publishing the prediction of remaining useful life of the device to a prognostic monitor.

3. The architecture of claim 1, wherein the estimation system (30) is adapted for collecting a plurality of signal values from the at least one device.

4. The architecture of claim 1, wherein the estimation system (30) is embedded in a platform (10) of a vehicle.

5. The architecture of claim 1, further including a classifier in communication with the supervisory system (36), wherein the supervisory system (36) is further adapted for:
generating at least one degradation signature (44), the at least one degradation signature (44) representing a mapping of the performance estimate (42) against the at least one known degradation condition (40), and
providing the at least one degradation signature (44) to the classifier.

6. A method for calculating a prediction of remaining useful life (RUL) of at least one device embedded in a platform (10), comprising:
collecting a plurality of input signal values from the at least one device (54);
determining at least one performance characteristic based on the plurality of input signal values in at least one estimator system (56);
generating at least one performance estimate from the at least one performance characteristic (58);
forwarding the at least one performance estimate (42) to a supervisory system (60); and
implementing at least one data-driven equation in the supervisory system to match the at least one performance estimate against at least one known degradation condition to generate the prediction of remaining useful life of the at least one device (62).

7. The method of claim 12, further including publishing the prediction of remaining useful life to a prognostic monitor.

8. The method of claim 12, further including embedding the at least one estimator system in a line-replaceable unit (LRU) of a vehicle.

9. The method of claim 12, further including embedding the at least one estimator system in a platform of a vehicle.

10. The method of claim 12, further including generating at least one degradation signature, the at least one degradation signature representing a mapping of the performance characteristic with the at least one known degradation condition.
